Europäisches Patentamt

European Patent Office

Office européen des brevets

(11) Veröffentlichungsnummer: **0 548 688 B1**

(12) **EUROPÄISCHE PATENTSCHRIFT**

(45) Veröffentlichungstag der Patentschrift: **12.07.95**

(51) Int. Cl.⁶: **F26B 17/10**, F26B 3/10, B01J 8/18

(21) Anmeldenummer: **92121044.9**

(22) Anmeldetag: **10.12.92**

(54) **Verfahren und Vorrichtung zur Temperaturbehandlung eines Gemisches von festen Stoffen und Gasen.**

(30) Priorität: **24.12.91 DE 4142926**

(43) Veröffentlichungstag der Anmeldung:
**30.06.93 Patentblatt 93/26**

(45) Bekanntmachung des Hinweises auf die
Patenterteilung:
**12.07.95 Patentblatt 95/28**

(84) Benannte Vertragsstaaten:
**CH DE DK FR GB LI**

(56) Entgegenhaltungen:
**DE-B- 1 129 113**
**US-A- 3 518 778**
**US-A- 4 089 119**

(73) Patentinhaber: **HOECHST AKTIENGESELL-SCHAFT**

**D-65926 Frankfurt (DE)**

(72) Erfinder: **Heinze, Christoph**
**Virchowstrasse 12**
**W-8263 Burghausen (DE)**

**Beschreibung**

Aus der US-Patentschrift 4 089 119 ist ein verfahren zur Temperaturbehandlung eines Gemisches von festen Stoffen und Gasen bekannt, wobei das Gas tangential in den unteren Teil eines rotationssymmetrisch ausgebildeten Behälters eingeführt, der feste Stoff dem Gas spätestens nach Eintritt in den Behälter zugesetzt, das Gemisch von Feststoff und Gas durch den Behältermantel temperiert, der feststoffhaltige Gasstrom innerhalb des Behälters von unten nach oben in mindestens zwei in sich weitgehend abgeschlossenen, waagerecht übereinanderliegenden Strömungsringen geführt wird, wobei der Stofftransport von einem Strömungsring zum darüberliegenden nächsten Strömungsring in einer konzentrischen Innenzone der Strömungsringe erfolgt und das Gemisch im oberen Teil des Behälters abgeführt wird. Dieses verfahren ist nur auf Gemische mit feinteiligen festen Stoffen anwendbar. Wenn der Feststoff einzelne größere Teilchen enthält, kann eine Ablagerungsmöglichkeit im unteren Teil vorgesehen werden, wo grobe Teile ausgeschleust, gegebenenfalls zerkleinert und zurückgeführt werden. Soll die bei diesem verfahren gegebene Windsichterwirkung noch verstärkt werden, dann wird der Feststoff oberhalb des Gaseintritts in Höhe des zweiten, dritten oder vierten Strömungsringes zugesetzt.

In einer besonderen Ausgestaltung dieses Verfahrens wird eine Vorrichtung eingesetzt, die aus zwei übereinanderliegenden zylindrischen Behälterteilen besteht, wobei der untere Teil einen engeren Durchmesser hat. Bei dieser Ausgestaltung wird in den unteren Teil das Gas und am unteren Ende des oberen Teils der Feststoff eingetragen.

In anderen Ausgestaltungen wird ein einziger zylindrischer Behälter von unten mit dem Gemisch aus feinteiligem Feststoff und Gas beschickt, wobei der Feststoff Anteile enthalten kann, die aus ausgeschleusten groben Partikeln bestehen, die vor der Rückführung gemahlen wurden.

Es wurde nun gefunden, daß dieses Verfahren erheblich verbessert wird, wenn man das Gemisch aus Gas und Feststoff in den unteren Teil eines zylindrischen Behälters tangential einbringt, über dem ein zweiter zylindrischer Behälter mit größerem Durchmesser angeordnet ist. Es können hierbei Feststoffe eingesetzt werden, die grobe Teile enthalten, sofern sich diese noch pneumatisch fördern lassen. Weiterhin ist die Erfindung nicht auf die Nachtrocknung bereits vorgetrockneter (und noch dazu feinteiliger) Materialien beschränkt, sie kann vielmehr beispielsweise für die Trocknung von nassem Polyvinylchlorid mit groben Anteilen, aber auch beispielsweise für die Trocknung von Polytetrafluorethylen-Mikropulver-Schlamm eingesetzt werden. Weiterhin können Sesamkörner von ihrer festanhaftenden Schale befreit werden, ohne daß es zu Verklebungen oder Verklumpungen kommt.

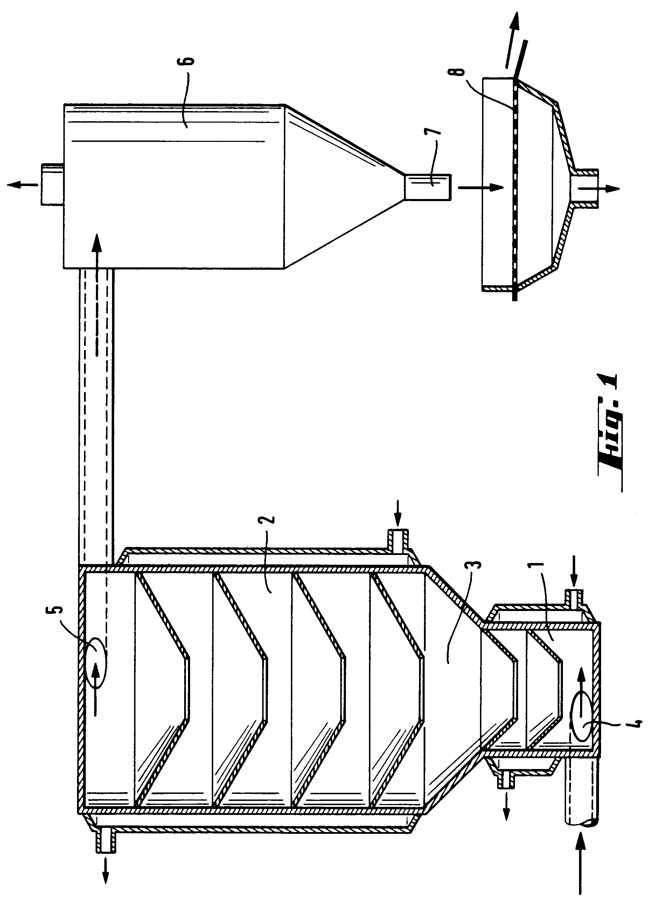

Kurze Erläuterung der Figuren:
Die Erfindung kann in verschiedenen Ausführungsformen realisiert werden:
Prinzipiell kann eine Vorrichtung nach Figur 7 der US-Patentschrift 4 089 119 eingesetzt werden, wobei das Feststoff-Gas-Gemisch durch die Zuführung (dort: 19) eingetragen wird. Hierbei ist die Zuführung (dort: 3) entbehrlich und in der erfindungsgemäß eingesetzten Ausgestaltung nach Figur 1 weggelassen.

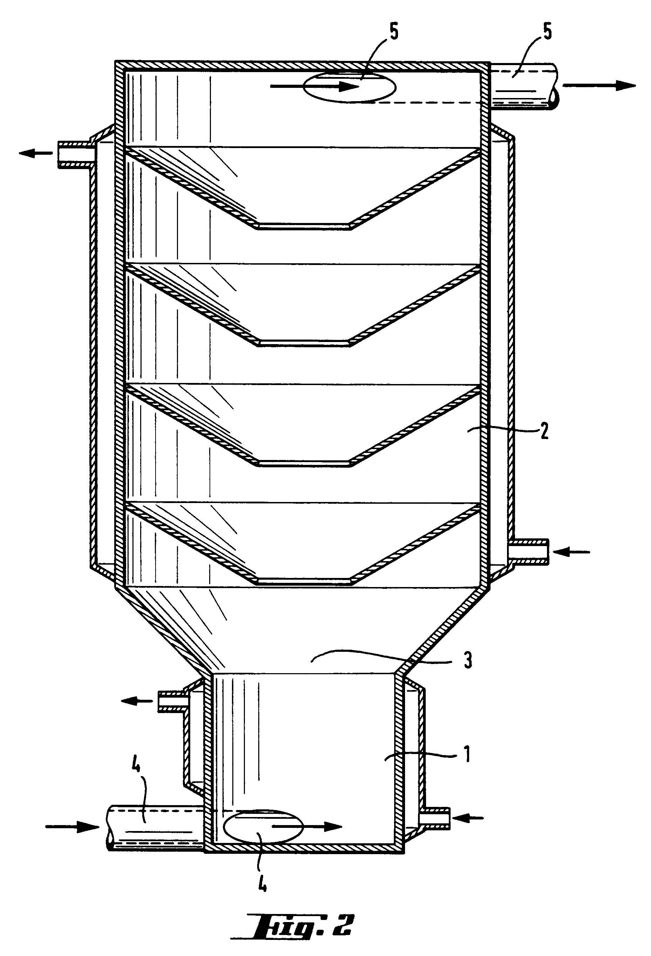

Vorteilhaft ist auch eine analoge Ausführungsform, bei der nur im oberen Behälterteil Ringblenden angeordnet sind (Figur 2).

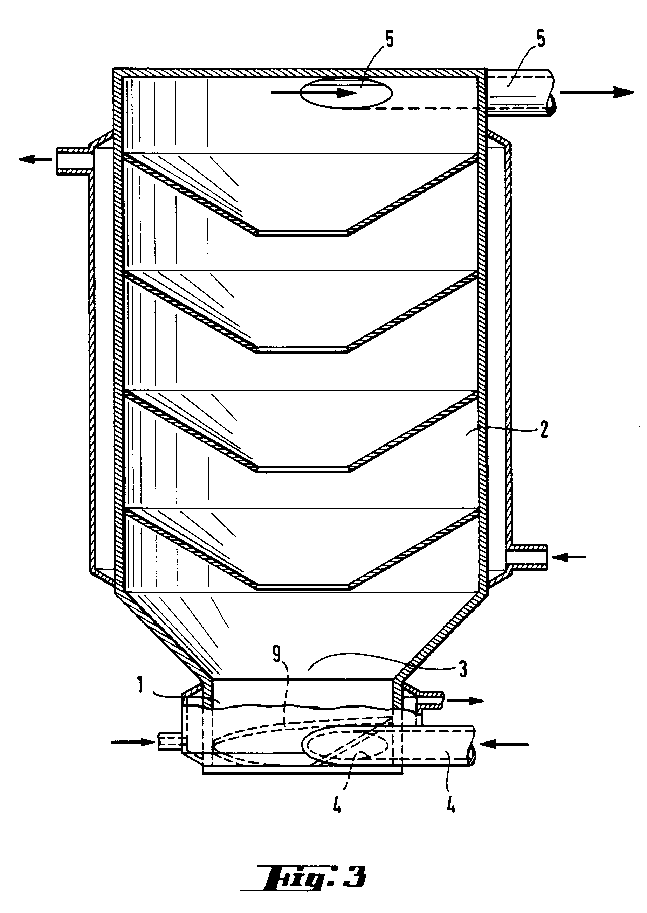

In einer weiteren vorteilhaften Ausführungsform werden in dem unteren, engeren Behälterteil die Ringblenden durch eine Wendel mit einer konzentrischen Innenzone ersetzt (Figur 3).

Entsprechende weitere Ausgestaltungen der Erfindung sind dem Fachmann aufgrund dieser Ausführungen und seines Fachwissens möglich.

Die Dimensionierung von unterem, engerem Behältnisteil (1) und oberem, weiterem Teil (2) erfolgt je nach Anwendungszweck und ist durch einfache Vorversuche zu ermitteln. Soll beispielsweise ein Feststoff mit Grobanteil getrocknet werden, so wird die Verweilzeit im Teil (1) vorteilhaft so eingerichtet, daß die Oberflächenfeuchte entfernt wird, worauf im Teil (2) aufgrund der entsprechend längeren Verweilzeit die Tiefenfeuchtigkeit entfernt wird. Hierbei wird die Verweilzeit im Teil (1) zweckmäßig so eingestellt, daß beim Übergang in den Teil (2) [Punkt (3)] ein rieselfähiges Produkt vorliegt.

Bauartbedingt nimmt die Gasgeschwindigkeit im Punkt (3) schlagartig ab. Sie muß aber selbstverständlich im Teil (2) groß genug bleiben, um den Feststoff zu fördern und im gewünschten Zustand am oberen Ende von Teil (2) auszutragen. Zweckmäßige Ausgestaltungen der Erfindung, die diesen Forderungen Rechnung tragen, sind deshalb beispielsweise:
Soll insbesondere ein verklumptes, zum Anbacken neigendes, nicht rieselfähiges Feuchtgut getrocknet werden, so sind zum Trocknen mit einem heißen Gas und zum pneumatischen Fördern hohe Gasgeschwindigkeiten erforderlich, so daS sich beispielsweise ein Produkt-Gas-Strom von mindestens 20 m/s, vorteilhaft 20 bis 100 m/s und insbesondere 25 bis 40 m/s, ergibt. Das Gemisch aus Heißgas und Feuchtgut wird mit dieser hohen Geschwindigkeit tangential in den Einlauf von Teil (1) geblasen. Das Verhältnis von Drallgeschwindigkeit $v_d$ zur Axialgeschwindigkeit $v_a$ beträgt hierbei mindestens 2, vorteilhaft 2 bis 10 und insbesondere 2,5 bis 5. Die Parameter werden hierbei so gewählt, daß der vorgetrocknete Feststoff nur wenige Sekunden im Teil (1) bleibt, wobei die verdampfte Oberflächenfeuchte in das Heißgas übergeht, der Feststoff aber nicht thermisch belastet wird.

Nach der Vortrocknung im Teil (1) tritt das Gemisch aus Heißgas, jetzt mit der Feuchtigkeit beladen, und dem vorgetrockneten Feststoff im Punkt (3) mit hoher Drallgeschwindigkeit in den Teil (2) ein, der als Nachtrockner wirkt. Um sicherzustellen, daß in Teil (1) alle Feststoffpartikel in die nach oben gerichtete Axialströmung gelangen, ist im Teil (1) eine hohe Radialgeschwindigkeit erforderlich, die die Schleppkraft ausübt. Im Teil (2) ist dagegen wichtig, daß durch den größeren Durchmesser die Radialgeschwindigkeit so reduziert wird, daß in den Öffnungen der Ringblenden der gewünschte Sichteffekt erzielt wird beziehungsweise die erforderliche Verweilzeit - entsprechend der benötigten Nachtrockenzeit - erreicht wird.

Das Heißgas verläßt den Teil (1) mit einer niedrigeren Temperatur, verursacht durch die verdampfte Oberflächenfeuchte, wobei aber die Temperatur noch hoch genug sein muß, daß damit die gewünschte Nachtrocknung im Teil (2) möglich ist. Der große Vorteil der Erfindung liegt darin, daß Vor- und Nachtrocknung mit dem gleichen Gas erzielt werden.

Die Erfindung wird in den folgenden Beispielen näher erläutert, wobei die Dimensionierung der Apparate und die Ergebnisse zur Erleichterung der Übersicht in der Tabelle 1 dargestellt werden. Prozentangaben beziehen sich auf das Gewicht.

Beispiel 1 (Konditionierung von Sesamsaat)

Rohe Sesamsaat besteht zu etwa 80 % aus Kern und zu etwa 20 % aus Schale. Beide werden bisher durch Flotation in Salzwasser getrennt, worauf ein Waschprozeß und ein Trocknungsschritt folgen. Dieses Verfahrens ist aufwendig, insbesondere der Waschprozeß, da Sesam hauptsächlich in Ländern erzeugt und verbraucht wird, die wasserarm sind.

Erwünscht ist ein Endprodukt mit einer möglichst hohen Restfeuchte des Kernes von 15 bis 19 % und einem Anteil von etwa 10 % Schale. Erfindungsgemäß wird ein solches Produkt wie folgt erhalten:

Das Rohprodukt wird zur Entfernung von Schmutz und "toter" Saat gewaschen und gelangt mit etwa 40 % Restfeuchte in ein langsam laufendes Rührwerk. In diesem wird das Korn "geschält", das heißt durch Reibung die Schale vom Kern gelöst, aber nicht getrennt.

44 kg/h dieses Produkts werden nun in einer Vorrichtung nach Figur 1 mit 550 Nm$^3$/h von 114 °C verwirbelt und über den Einlaß (4) in den Teil (1) mit einer Geschwindigkeit von 30 m/s geblasen. Das Verhältnis der Drallgeschwindigkeit $v_d$ zur Axialgeschwindigkeit $v_a$ beträgt 2,5 : 1.

Im Übergangspunkt (3) verringert sich die Geschwindigkeit des Produkt-Luft-Gemisches auf 12 m/s und die Lufttemperatur auf 85 °C. Die Produktfeuchte beträgt 25 %.

In Teil (2) beträgt die Verveilzeit des Produkts das 500fache der Vortrockenzeit im Teil (1). Die Lufttemperatur, gemessen am Ausgang (5) von Teil (2), verringert sich auf 70 °C und das Produkt wird mit einer Restfeuchte von 19 % in den Zyklon (6) gefördert. Aus dem Zyklon (6) gelangt der Feststoff über die Leitung (7) auf das Sieb (8), in dem die Trennung in Kern und Schale erfolgt.

Vergleichsbeispiel

Beim Versuch, das "geschälte" Produkt in einer Apparatur gemäß US-Patentschrift 4 089 119, Figur 7, zu konditionieren, wobei die Luft durch die Zuführung (dort: 19) und das Sesamkorn durch die Zuführung (dort: 3) eingetragen werden, erhält man ein Produkt mit einer Restfeuchte von nur 4 %. Außerdem hat sich die Schale vollständig vom Korn gelöst. Weiterhin kommt es im Teil (1) der Apparatur zu Verklumpungen.

Beispiel 2

In einer Apparatur nach Figur 2 wird ein Polytetrafluorethylen-Mikropulver-Schlamm mit einem Feuchtigkeitsgehalt von 50 % (Wasser und wenig Kohlenwasserstoffe) und einer Korngrößenverteilung von 20 µm bis 10 cm in einer Menge von 75 kg/h mit stündlich 4000 Nm$^3$ Luft von 250 °C verwirbelt und über den Einlaß (4) in den Teil (1) in einer Geschwindigkeit von 25 m/s eingebracht. Das Verhältnis $v_d$ : $v_a$ beträgt 4,5 : 1.

Im Punkt (3) ist die Lufttemperatur auf 175 °C abgesunken, die Produkt-Luft-Gemisch-Geschwindigkeit beträgt 5,5 m/s. Das vorgetrocknete Produkt enthält nur noch 7 % Restfeuchte. Im Teil (2) wird eine 300fach längere Verweilzeit eingehalten und das Produkt im Auslaß (5) bei einer Lufttemperatur von 150 °C ausgetragen. Das Produkt hat eine Restfeuchte von unter 0,01 %.

Beispiel 3

Ein verklumptes Suspensions-Polyvinylchlorid mit einer Korngrößenverteilung von 20 µm bis 10 cm und einem Wassergehalt von 30 % wird stündlich mit 50 000 Nm³ Luft von 170 °C mit einer Geschwindigkeit von 40 m/s über den Einlaß (4) in den Teil (1) eingeblasen. Das Verhältnis $v_d : v_a$ beträgt 5 : 1.

Über die Wendel (9) gelangt das Produkt-Luft-Gemisch am Punkt (3) mit einer Geschwindigkeit von 8 m/s in den Teil (2), wobei die Lufttemperatur 70 °C beträgt. Das so vorgetrocknete Produkt enthält noch 4 % Wasser.

Im Teil (2) wird eine gegenüber Teil (1) 600fache Verweilzeit eingehalten. Das Produkt wird am Austragspunkt (5) bei einer Lufttemperatur von 60 °C mit einer Restfeuchte von maximal 0,2 % ausgetragen.

Erläuterungen zur Tabelle 1:
- In den Zeilen "Feuchte" und "Temperatur" bedeuten die durch Schrägstrich getrennten Zahlen die im Einlaß (4), im Punkt (3) und im Auslaß (5) gemessenen Werte.
- "$v_1$" bedeutet die Geschwindigkeit des Produkt-Gas-Stroms im Einlaß (4) von Teil (1), "$(v_a)_2$" die Axialgeschwindigkeit beim Eintritt in den Teil (2) [im Punkt (3)].

- "$t_{2/1}$" bedeutet das Verhältnis der Verweilzeiten in den Teilen (2) und (1).

**TABELLE 1**

| | | Beispiele | |
|---|---|---|---|
| | **1** | **2** | **3** |
| Produkt: Art | Sesam | PTFE | S-PVC |
| Korngröße | 1,2 bis 2,0 mm | 20 µm bis 10 cm | 20 µm bis 10 cm |
| Menge, kg/h | 44 | 75 | 8 500 |
| Feuchte, % | 40/25/19 | 50/7/< 0,01 | 30/4/≤ 0,2 |
| Luft: Menge, $Nm^3/h$ | 550 | 4 000 | 50 000 |
| Temperatur, °C | 114/85/70 | 250/175/150 | 170/70/60 |
| Gemisch: $v_1$, m/s | 30 | 25 | 40 |
| $(v_d/v_a)_1$ | 2,5 | 4,5 | 5 |
| $(v_a)_2$, m/s | 12 | 5,5 | 8 |
| $t_{2/1}$ | 500 | 300 | 600 |
| Apparatur: Figur | 1 | 2 | 3 |
| Ø (2) : Ø (1) | 1,33 | 1,74 | 1,7 |
| Höhe (1) : Ø (1) | 0,95 | 1 | 0,9 |

**Patentansprüche**

1.  Verfahren zur Temperaturbehandlung eines Gemisches von festen Stoffen und Gasen, bei dem ein pneumatisch förderbares Gemisch aus Feststoff und Gas tangential in den unteren Teil eines rotationssymmetrisch ausgebildeten Behälters mit hoher Geschwindigkeit eingeführt wird und anschließend in eine Zone mit reduzierter Geschwindigkeit gefördert wird, das Gemisch von Feststoff und Gas durch den Behältermantel temperiert, der feststoffhaltige Gasstrom innerhalb des Behälters von unten nach oben in mindestens zwei in sich weitgehend abgeschlossenen, waagrecht übereinanderliegenden Strömungsringen geführt wird, wobei der Stofftransport von einem Strömungsring zum darüberliegenden nächsten Strömungsring in einer konzentrischen Innenzone der Strömungsringe erfolgt und das Gemisch im oberen Teil des Behälters abgeführt wird.

2. Verfahren nach Anspruch 1, dadurch gekennzeichnet, daß das Gemisch aus Feststoff und Gas mit einer Geschwindigkeit von mindestens 20 m/s eingeführt wird.

3. Verfahren nach Anspruch 2, dadurch gekennzeichnet, daß die Geschwindigkeit 20 bis 100 m/s beträgt.

4. Verfahren nach Anspruch 3, dadurch gekennzeichnet, daß die Geschwindigkeit 25 bis 40 m/s beträgt.

5. Verfahren nach einem oder mehreren der vorhergehenden Ansprüche, dadurch gekennzeichnet, daß das Gemisch aus Feststoff und Gas in der Zone hoher Geschwindigkeit ein Verhältnis von Drallgeschwindigkeit $v_d$ zur Axialgeschwindigkeit $v_a$ von mindestens 2 hat.

6. Verfahren nach Anspruch 5, dadurch gekennzeichnet, daß das Verhältnis 2 bis 10 beträgt.

7. Verfahren nach Anspruch 5, dadurch gekennzeichnet, daß das Verhältnis 2,5 bis 5 beträgt.

8. Verwendung einer Vorrichtung, bestehend aus einem Behälter mit rotationssymmetrisch ausgebildetem Innenraum, dessen Mantel mindestens über Teilbereiche Heizvorrichtungen enthält, der im unteren Teil und im oberen Teil je mindestens eine tangential zum Mantel angeordnete Öffnung besitzt, wobei im Inneren des Behälters zwischen den beiden Öffnungen mindestens eine an der Behälterwandung dicht abschließende Ringblende angeordnet ist, wobei der untere Teil des Behälters einen kleineren Durchmesser als der obere aufweist, zur Ausführung des Verfahrens nach einem oder mehreren der Ansprüche 1 bis 7, dadurch gekennzeichnet, daß die gemeinsame Zuführung für Gas und Feststoff in den unteren, engeren Teil des Behälters führt.

9. Vorrichtung zur Ausführung des Verfahrens nach einem oder mehreren der Ansprüche 1 bis 7, bestehend aus einem Behälter mit rotationssymmetrisch ausgebildetem Innenraum, dessen Mantel mindestens über Teilbereiche Heizvorrichtungen enthält, der im unteren Teil und im oberen Teil je mindestens eine tangential zum Mantel angeordnete Öffnung besitzt, wobei im Inneren des Behälters zwischen den beiden Öffnungen mindestens eine an der Behälterwandung dicht abschließende Ringblende angeordnet ist, und wobei der untere Teil des Behälters einen kleineren Durchmesser als der obere aufweist, dadurch gekennzeichnet, daß die gemeinsame Zuführung für Gas und Feststoff in den unteren, engeren Teil des Behälters führt und daß nur der obere, weitere Teil des Behälters eine oder mehrere Ringblende(n) enthält.

10. Vorrichtung zur Ausführung des Verfahrens nach einem oder mehreren der Ansprüche 1 bis 7, bestehend aus einem Behälter mit rotationssymmetrisch ausgebildetem Innenraum, dessen Mantel mindestens über Teilbereiche Heizvorrichtungen enthält, der im unteren Teil und im oberen Teil je mindestens eine tangential zum Mantel angeordnete Öffnung besitzt, wobei im Inneren des Behälters zwischen den beiden Öffnungen mindestens eine an der Behälterwandung dicht abschließende Ringblende angeordnet ist, und wobei der untere Teil des Behälters einen kleineren Durchmesser als der obere aufweist, dadurch gekennzeichnet, daß die gemeinsame Zuführung für Gas und Feststoff in den unteren, engeren Teil des Behälters führt und daß der untere, engere Teil des Behältnisses eine an der Behälterwandung dicht abschließende Wendel enthält, die die Förderung des eingetragenen Gas-Produkt-Stroms in den oberen, weiteren Behälterteil verbessert.

## Claims

1. A process for the thermal treatment of a mixture of solid substances and gases in which a pneumatically transportable mixture of solid and gas is introduced tangentially into the lower part of an axially symmetrical vessel with high velocity and subsequently transported into a zone having reduced velocity, the solid substance is added to the gas at the latest after entry into the vessel, the mixture of solid and gas is heated by the vessel shell, the solid-containing gas stream is directed within the vessel from bottom to top in at least two substantially closed, horizontally stacked flow rings, the mass transport from one flow ring to the next flow ring above takes place in a concentric internal zone of the

EP 0 548 688 B1

flow rings and the mixture is withdrawn in the upper part of the vessel.

2. The process as claimed in claim 1, wherein the mixture of solid and gas is introduced at a velocity of at least 20 m/s.

3. The process as claimed in claim 2, wherein the velocity is 20 to 100 m/s.

4. The process as claimed in claim 3, wherein the velocity is 25 to 40 m/s.

5. The process as claimed in one or more of the preceding claims, wherein the mixture of solid and gas in the zone of high velocity has a ratio of angular velocity $v_d$ to axial velocity $v_a$ of at least 2.

6. The process as claimed in claim 5, wherein the ratio is 2 to 10.

7. The process as claimed in claim 5, wherein the ratio is 2.5 to 5.

8. Use of an apparatus, consisting of a vessel having an axially symmetrical interior, the shell of which contains heating devices at least over part areas, which vessel has in the lower part and in the upper part in each case at least one opening arranged tangentially to the shell, in the interior of the vessel at least one annular baffle tightly sealing to the vessel wall being arranged between the two openings, and the lower part of the vessel having a smaller diameter than the upper part, for carrying out the process as claimed in one or more of claims 1 to 7, characterized in that the common feed for gas and solid leads into the lower, narrower part of the vessel.

9. An apparatus for carrying out the process as claimed in one or more of claims 1 to 7, comprising a vessel having an axially symmetrical interior, the shell of which contains heating devices at least over part areas, which vessel has in the lower part and in the upper part in each case at least one opening arranged tangentially to the shell, in the interior of the vessel at least one annular baffle tightly sealing to the vessel wall being arranged between the two openings, and the lower part of the vessel having a smaller diameter than the upper part, characterized in that the common feed for gas and solid leads into the lower, narrower part of the vessel and that only the upper, wider part of the vessel contains one or more annular baffle(s).

10. An apparatus for carrying out the process as claimed in one or more of claims 1 to 7, comprising a vessel having an axially symmetrical interior, the shell of which contains heating devices at least over part areas, which vessel has in the lower part and in the upper part in each case at least one opening arranged tangentially to the shell, in the interior of the vessel at least one annular baffle tightly sealing to the vessel wall being arranged between the two openings, and the lower part of the vessel having a smaller diameter than the upper part, characterized in that the common feed for gas and solid leads into the lower, narrower part of the vessel and that the lower, narrower part of the vessel contains a spiral tightly sealing to the vessel wall, which improves the transport of the entered gas/product stream into the upper, wider vessel part.

**Revendications**

1. Procédé pour le traitement thermique d'un mélange de matières solides et de gaz selon lequel on introduit un mélange de matières solides et de gaz transportable par voie pneumatique, de façon tangentielle dans la partie inférieure d'un récipient formé à symétrie de révolution avec une vitesse élevée, et ensuite on le transporte dans une zone avec une vitesse réduite, on tempère le mélange de matière solide et de gaz à travers la gaine du récipient, on conduit le flux de gaz chargé de solides à l'intérieur du récipient, du bas vers le haut, dans au moins deux anneaux d'écoulement scellés en continu, superposés horizontalement l'un sur l'autre, le transport de la matière étant effectué dans un anneau d'écoulement à l'anneau d'écoulement suivant, superposé, dans une zone intérieure concentrique des anneaux d'écoulement, et le mélange est évacué par la partie supérieure du récipient.

2. Procédé selon la revendication 1, caractérisé en ce que le mélange de matière solide et de gaz est introduit avec une vitesse d'au moins 20 m/s.

7

**3.** Procédé selon la revendication 2, caractérisé en ce que la vitesse est de 20 à 100 m/s.

**4.** Procédé selon la revendication 3, caractérisé en ce que la vitesse est de 25 à 40 m/s.

**5.** Procédé selon une ou plusieurs des revendications précédentes, caractérisé en ce que le mélange de matière solide et de gaz dans la zone des grandes vitesses a un rapport de la vitesse de rotation $v_d$ à la vitesse axiale $v_a$ d'au moins 2.

**6.** Procédé selon la revendication 5, caractérisé en ce que le rapport est de 2 à 10.

**7.** Procédé selon la revendication 5, caractérisé en ce le rapport est de 2,5 à 5.

**8.** Utilisation d'un appareil constitué d'un récipient avec un espace intérieur formé à symétrie de révolution, dont la gaine contient, au moins dans des zones partielles, des dispositifs de chauffage, qui dans la partie inférieure et dans la partie supérieure est pourvu chaque fois d'au moins un orifice disposé de façon tangentielle par rapport à la gaine, à l'intérieur du récipient, entre les deux orifices, étant disposé hermétiquement sur les parois du récipient au moins un diaphragme circulaire, la partie inférieure du récipient ayant un diamètre plus petit que celui présenté par la partie supérieure, pour la mise en oeuvre du procédé selon une ou plusieurs des revendications 1 à 7, caractérisée en ce que l'admission commune du gaz et de la matière solide conduit dans la partie inférieure, plus étroite, du récipient.

**9.** Appareil pour la mise en oeuvre du procédé selon une ou plusieurs des revendication 1 à 7, constitué d'un récipient avec un espace intérieur formé à symétrie de révolution, dont la gaine contient, au moins dans des zones partielles, des dispositifs de chauffage, qui dans la partie inférieure et dans la supérieure est pourvu chaque fois d'au moins un orifice disposé de façon tangentielle par rapport à la gaine, à l'intérieur du récipient, entre les deux orifices, étant disposé hermétiquement sur les parois du récipient au moins un diaphragme circulaire, et la partie inférieure du récipient présentant un diamètre plus petit que la partie supérieure, caractérisé en ce que l'admission commune pour le gaz et la matière solide conduit à la partie inférieure, plus étroite, du récipient et que seulement la partie supérieure, plus large, du récipient contient un ou plusieurs diaphragme(s) circulaire(s).

**10.** Appareil pour la mise en oeuvre du procédé selon une ou plusieurs des revendications 1 à 7, constitué d'un récipient avec un espace intérieur formé à symétrie de révolution, dont la gaine contient, au moins dans des zones partielles, des dispositifs de chauffage, qui est pourvu dans la partie inférieure et dans la partie supérieure chaque fois d'au moins un orifice disposé de façon tangentielle par rapport à la gaine, à l'intérieur du récipient, entre les deux orifices, étant disposé hermétiquement sur les parois du récipient au moins un diaphragme circulaire et la partie inférieure du récipient présentant un diamètre plus petit que la partie supérieure, caractérisé en ce que l'admission commune du gaz et de la matière solide conduit dans la partie inférieure, plus étroite, du récipient et que la partie inférieure, plus étroite, du récipient comporte une hélice hermétiquement disposée qui améliore le transport du flux gaz-produit dans la partie supérieure, plus large, du récipient.

Fig. 1

**Fig. 2**

*Fig. 3*